# DEMANDE DE BREVET EUROPEEN

(11) **EP 4 656 374 A1**
(43) Date de publication de la demande: **03.12.2025**
(21) Numéro de dépôt: 25172488.6
(22) Date de dépôt: 25.04.2025
(51) Int. Cl.: B32B 5/02, B32B 7/12, B32B 27/08, B32B 27/10, B32B 27/12, B32B 27/16, B32B 27/30, B32B 27/32, B32B 27/34, B32B 27/36, B32B 27/40, B32B 29/00

(54) **STRUCTURE MULTICOUCHE POUR LA REALISATION D'UN REVETEMENT DE SOL OU DE MUR, HETEROGENE, IMPRIME ET A BASE DE LINOLEUM**

(30) Priorité: 28.05.2024 FR 2405473
(71) Demandeur: GERFLOR, 69009 Lyon (FR)
(72) Inventeur: BUFFIN, Cyndie, 69009 LYON (FR); RAMPON, Raphael, 69009 LYON (FR)
(74) Mandataire: Ipsilon

(57) **Abrégé**

L'invention concerne une structure multicouche (1) pour la réalisation d'un revêtement de sol ou de mur comprenant une couche d'envers (2) à base de linoléum renforcée par une armature de renfort (3), une couche d'usure (4) en polymère thermoplastique transparente au moins à la lumière du domaine du visible et liée à la couche d'envers (2), et une couche d'impression décor (5) positionnée entre la couche d'usure (4) et la couche d'envers (2), caractérisée en ce qu'elle comprend une couche de vernis réticulée (11) déposée sur une face inférieure de la couche d'envers (2).

## Description

### Domaine technique

La présente invention concerne une structure multicouche pour la réalisation d'un revêtement de sol ou de mur, hétérogène, imprimé d'un décor et à base de linoleum.

La présente invention trouve une application avantageuse dans la réalisation de revêtements de sol à base de linoléum et à pose libre, par exemple présentés sous forme de rouleaux, de dalles ou de lames.

### Art antérieur

Dans le domaine de la présente invention, il est connu de réaliser une structure multicouche pour la réalisation d'un revêtement de sol ou de mur, hétérogène présentant un décor en impression numérique sur une couche d'envers à base de linoleum.

Par exemple, il est connu une structure multicouche comprenant :
- une couche d'envers à base de linoléum laquelle est supportée par une armature de renfort, telle qu'une toile de jute ou une grille tissée en polyester, destinée à être en contact avec le sol ou le mur ;
- une couche de primaire d'accrochage positionnée sur la couche d'envers ;
- une couche d'impression décor, telle qu'une couche d'impression numérique, déposée sur la couche de primaire d'accrochage ;
- une couche d'usure en polyuréthane réticulé positionnée sur la couche d'impression décor.

En pratique, la couche d'envers à base de linoléum peut comprendre deux couches liées ensemble, à savoir une couche supérieure en linoleum dite « noble » et une couche inférieure en linoléum recyclé.

Pendant la fabrication, la couche noble et la couche contenant du linoléum recyclé sont calandrées ensemble sur l'armature de renfort avant d'être réticulées dans un four à 80 °C pendant plus de 30 jours.

L'inconvénient de ce type de structure multicouche est que la résistance à l'abrasion de la couche d'usure en polyuréthane réticulé n'est pas suffisante. En effet, des tests d'abrasion montrent une usure trop rapide pour des structures multicouches soumises à des trafics moyens. En particulier, le décor disparaît après 550 cycles d'une machine d'essai d'abrasion et d'usure connue sous le nom TABER (Marque déposée) selon la norme NF EN 16511+A1.

Le document EP 2 723 561 prévoit de réaliser cette couche d'usure en polyuréthane réticulé par scellage à chaud et intégrant des particules inorganiques. Ce type de couche par scellage à chaud est notamment connue de l'homme du métier sous le nom anglais « hotcoating » et est appliquée de préférence avec une épaisseur comprise entre 50 et 150 µm, et chargée avec une charge permettant la résistance à l'abrasion, telle que par exemple une charge de type alumine.

Une couche d'usure en polyuréthane réticulé est plus résistante lorsqu'elle est obtenue à partir d'une couche de scellage à chaud. Cependant, cette couche d'usure rajoute des contraintes mécaniques en surface du revêtement qui peuvent entraîner une forte incurvation de celui-ci lorsqu'il se présente sous la forme d'une lame. De plus, ce type de couche d'usure peut être cassant s'il est soumis à des chocs importants. D'autre part, le procédé de fabrication d'une structure multicouche comprenant une telle couche d'usure est long et coûteux.

Par ailleurs, selon l'une ou l'autre des structures multicouches décrites ci-avant, il n'est pas possible de grainer la couche d'usure après réticulation, ce qui rend les produits obtenus moins réalistes ou plus complexe à réaliser.

Il est également connu le document EP2424911 qui décrit la présence d'une couche de vernis sur un support homogène qui peut être en linoleum, présenté en rouleau, dalle ou lame. Le vernis UV est déposé en surface ou sur les bords ou en envers du support, pour sceller le produit. EP2424911 ne décrit pas que le support type dalle, lame ou rouleau puisse avoir une construction hétérogène, ni ne vise à résoudre le problème d'équilibrage de ce type de support hétérogène.

Il est étalement connu le document EP3995305 qui vise à résoudre le problème d'équilibrage de revêtements hétérogènes de sol ou de mur à base de linoleum.

Ce document décrit notamment une structure multicouche pour la réalisation d'un revêtement de sol ou de mur comprenant une couche d'envers à base de linoléum renforcée par une armature de renfort, une couche d'usure liée à la couche d'envers, et une couche d'impression décor positionnée entre la couche d'usure et la couche d'envers.

Pour remédier aux problèmes d'équilibrage, ce document propose que la couche d'usure soit réalisée en polytéréphtalate d'éthylène (PET), polyuréthane thermoplastique (TPU), de préférence aliphatique, polypropylène (PP), ou polytéréphtalate d'éthylène glycol (PETG), ou en ionomère.

Cependant, il s'avère que le linoleum est une matière très sensible à l'humidité ambiante, et que la moindre variation d'humidité entraine des phénomènes d'incurvation.

En particulier la couche thermoplastique de surface présente un comportement mécanique et thermique différent de celui de la couche d'envers en linoléum. Par ailleurs le procédé de fabrication en continu de ce type de revêtement, comprend des phases de chauffe et d'enroulement qui viennent rajouter des tensions dans les différentes couches. La couche de surface est donc très sensible aux variations de température, et la couche d'envers en linoléum est sensible aux tensions appliquées ainsi qu'à l'humidité.

### Exposé de l'invention

L'un des buts de l'invention est donc de remédier aux problèmes précités en fournissant une structure multicouche pour la réalisation d'un revêtement hétérogène de sol ou de mur à base de linoleum imprimé avec un décor, qui présente une résistance suffisante en termes d'abrasion, c'est-à-dire qui satisfait les tests de la norme NF EN 16511+A1, tout en évitant les problèmes d'incurvation du revêtement lorsqu'il se présente sous forme de lames ou de dalles.

A cet effet, il a été mis au point une structure multicouche pour la réalisation d'un revêtement de sol ou de mur comprenant une couche d'envers à base de linoléum renforcée par une armature de renfort, une couche d'usure en polymère thermoplastique transparente au moins à la lumière du domaine du visible et liée à la couche d'envers, et une couche d'impression décor positionnée entre la couche d'usure et la couche d'envers.

Selon l'invention, la structure multicouche comprend une couche de vernis réticulée, par exemple à base de polyuréthane ou d'acrylique, déposée sur une face inférieure de la couche d'envers.

Le revêtement selon l'invention présente une résistance suffisante en termes d'abrasion, en satisfaisant notamment la norme NF EN 16511+A1, tout en diminuant, voire en supprimant les problèmes d'incurvation du revêtement lorsqu'il se présente sous la forme de lame et en rendant la structure multicouche moins cassante. L'utilisation d'une telle couche d'impression décor améliore également la stabilité dimensionnelle de la structure multicouche.

La couche de vernis réticulée permet de limiter la sensibilité du linoleum à l'eau par un effet « bouche pore ». La couche de vernis retarde donc l'absorption de l'eau et a donc un effet barrière à l'humidité, ce qui réduit davantage les risques de phénomènes d'incurvation du revêtement, qui reste notamment inférieur à 3 mm, de préférence inférieur à 2 mm.

La couche de vernis permet également de contrebalancer les tensions générées par la couche de surface en polymère thermoplastique, ce qui favorise l'équilibrage du revêtement.

L'invention permet donc de résoudre les problèmes de l'art antérieur, tout en conservant une épaisseur faible et un poids faible puisque la couche de vernis présente généralement une épaisseur pouvant être comprise entre 5 et 30 µm, de préférence entre 10 et 20 µm, ce qui équivaut à environ 10-20g/m².

En pratique, la structure multicouche présente par exemple une épaisseur comprise entre 1,4 mm et 3,5 mm, et la couche d'envers présente par exemple une épaisseur comprise entre 1,3 mm et 3 mm, de préférence entre 1,6 mm et 2,2 mm.

De préférence, la couche de vernis comprend une face inférieure texturée, par exemple grainée, pour améliorer l'adhérence au sol ou mur.

La couche d'usure en polymère thermoplastique est par exemple réalisée en polytéréphtalate d'éthylène (PET), polyuréthane thermoplastique (TPU), de préférence aliphatique, polypropylène (PP), ou polytéréphtalate d'éthylène glycol (PETG), ou en ionomère, ou en polychlorure de vinyle (PVC).

Le procédé de fabrication de la structure multicouche peut également être facilité et est moins couteux, car la couche d'impression décor est de préférence une couche d'encre imprimée, par exemple par impression numérique :
- sur une face inférieure de la couche d'usure qui est transparente, ou ;
- sur une face supérieure de la couche d'envers, ou ;
- sur une face supérieure d'une couche support en thermoplastique, par exemple en PVC, PET, TPU, de préférence aliphatique, PP, PETG ou en ionomère, ou d'une couche en papier imprégné d'un liant, tel que de la résine mélamine formaldéhyde ou urée formaldéhyde.

Ainsi, la couche d'impression décor peut être imprimée séparément sur une couche qui est ensuite liée à une autre couche du revêtement. Cela permet de faciliter le procédé, d'apporter plus de flexibilité et de réduire les coûts. En effet, l'obtention d'une couche d'envers est assez long, notamment supérieur à 30 jours, et se fait par campagne. Il est donc plus simple de réaliser séparément une couche d'envers et une couche d'usure présentant le décor et de les lier à façon. La structure multicouche peut être fabriquée en rouleau puis découpée en lames ou en dalles.

Par ailleurs, la couche d'usure mise en œuvre dans la structure multicouche selon l'invention peut être grainée et/ou chanfreinée, rendant ainsi le décor plus réaliste.

Selon une forme de réalisation particulière, la couche d'usure est liée à la couche d'envers par laminage à chaud, en fonction de la compatibilité chimique des deux matières à associer.

Selon une autre forme de réalisation, la couche d'usure est liée à la couche d'envers par l'intermédiaire d'une couche de liaison, éventuellement transparente au moins à la lumière du domaine du visible, telle qu'une couche de colle, par exemple thermofusible connue sous le nom anglais « hotmelt » par exemple en copolyester ou en polyuréthane réticulé, ou bien un film thermofusible, une grille thermofusible ou un voile thermofusible par exemple non tissé, de copolyester ou de copolyamide.

Dans le cas d'une couche de liaison sous la forme d'un film thermofusible, ledit film thermofusible peut être soit monocouche, par exemple en éthylène-acétate de vinyle (EVA), polyuréthane thermoplastique (TPU), copolyamide, polyester, copolyester, ou bien bicouche, tels que qu'un film co-extrudé composé d'une couche de copolyamide et d'une couche de polyoléfine.

Il est évident que, lorsqu'une couche de liaison est utilisée et que la couche d'impression décor est imprimée sur la face supérieure de la couche d'envers, ladite couche de liaison doit être transparente au moins à la lumière du domaine du visible pour ne pas masquer la couche d'impression décor.

Avantageusement et afin de faciliter le procédé de fabrication de la structure multicouche selon l'invention, la couche d'impression décor est de préférence imprimée par une machine d'impression numérique, et est une couche d'encre à base aqueuse, ou d'encre UV, notamment à réticuler sous ultraviolet.

De préférence, la couche d'impression décor est positionnée, et notamment imprimée sur une couche d'encre blanche, qui permet d'unifier le décor, ainsi que de faciliter la reproductibilité des couleurs du décor. Dans certains cas, notamment si une couche d'encre blanche est impossible à imprimer, la couche recevant ladite couche d'encre pourra être revêtue d'un primaire d'accrochage blanc aqueux à séchage en température ou d'un primaire d'accrochage blanc à séchage UV avant impression de la couche d'impression décor. Le primaire d'accrochage peut être de type polyuréthane ou acrylique.

Dans cette forme de réalisation, la couche de liaison peut être un film thermofusible bicouche comprenant une couche supérieure en polyoléfine, en raison de sa bonne affinité avec le polypropylène, et une couche inférieure en copolyamide, en raison de sa bonne affinité avec le linoléum, ou une couche thermofusible, par exemple en polyuréthane réticulé, en raison de sa bonne affinité avec le papier et le linoléum.

L'armature de renfort est noyée dans l'épaisseur de la couche d'envers au niveau d'une face inférieure et/ou supérieure de la couche d'envers, et se présente par exemple sous la forme d'une toile de jute, d'une armature à base de papier, d'un non-tissé ou d'une grille tissée en polyester, d'un tissu en coton ou fibres naturelles. L'intérêt de positionner l'armature de renfort sur une face supérieure de la couche d'envers est que cela permet d'améliorer la stabilité dimensionnelle et de limiter davantage, voire de supprimer le phénomène d'incurvation de la structure multicouche. Selon une variante, la structure multicouche comprend deux armatures de renfort, positionnées de part et d'autre de la couche d'envers.

De préférence, et dans le but de rendre le revêtement plus réaliste, en fonction du décor désiré, la face supérieure de la couche d'usure est chanfreinée et/ou grainée.

La couche de vernis déposée sur la face inférieure de la couche d'envers peut par exemple être un vernis photo-polymérisable. La polymérisation du vernis peut être réalisée de manière conventionnelle, c'est-à-dire au moyen d'émetteurs UV polychromatiques.

L'invention concerne également un procédé de fabrication d'une telle structure multicouche remarquable en ce que la couche de vernis est réticulée au moyen d'une exposition à un rayonnement ultraviolet, suivie ou précédée d'une exposition à un émetteur laser monochromatique de type laser à excimère.

De cette manière, on obtient plus de tensions dans la couche de vernis ce qui favorise le retour à plat de la structure multicouche. En d'autres termes, le fait de réticuler la couche de vernis au moyen d'un émetteur laser monochromatique de type laser à excimère permet d'avoir le même effet de contrebalancement qu'avec une technique de réticulation classique, mais avec une épaisseur plus faible de vernis.

D'autre part, une telle couche de vernis apporte un meilleur effet barrière à l'humidité et limite l'effet de reprise d'humidité de la couche de linoléum après la pose du produit et de sensibilité aux variations de température de la structure. L'effet de contrebalancement est donc plus durable.

### Brève description des dessins

[Fig.1] est une représentation schématique d'une structure multicouche selon une première variante de l'invention.
[Fig. 2] est une représentation schématique d'une structure multicouche selon une deuxième variante de l'invention.
[Fig. 3] est une représentation schématique d'une structure multicouche selon une troisième variante de l'invention.
[Fig. 4] est une représentation schématique d'une structure multicouche selon une quatrième variante de l'invention.
[Fig. 5] est une représentation schématique d'une structure multicouche selon une cinquième variante de l'invention.

### Description détaillée de l'invention

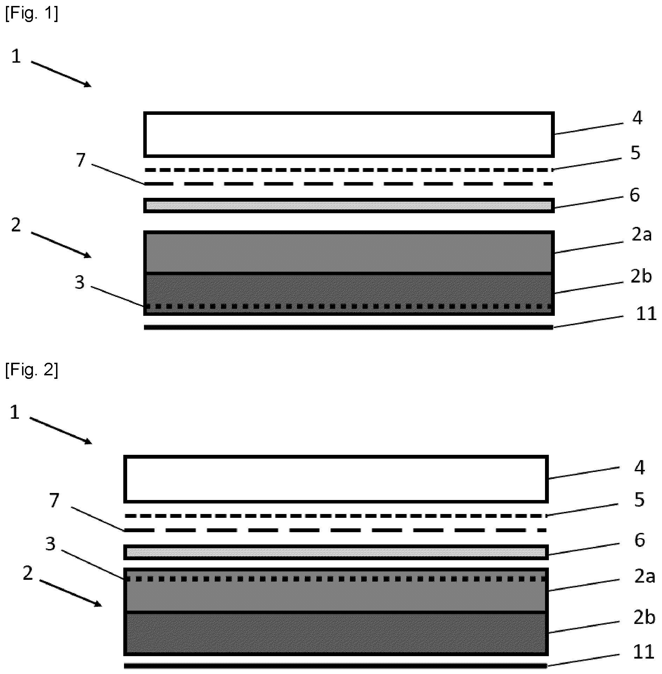

En référence aux figures 1 à 5, l'invention concerne une structure multicouche (1) pour la réalisation d'un revêtement de sol ou de mur, dit hétérogène et à base de linoléum, qui peut se présenter aussi bien en dalle, qu'en lame, panneau ou rouleau, avec une couche d'impression décor, de préférence obtenue par impression numérique, qui résiste aux tests en vigueur d'abrasion et dans lequel les phénomènes d'incurvation sont limités, voire évités.

À cet effet, la structure multicouche (1) comprend, d'une manière classique, une couche d'envers (2) à base de linoléum pouvant comprendre deux couches, à savoir une couche supérieure (2a) dite « noble » et une couche inférieure (2b) contenant du linoléum recyclé. La couche d'envers (2) présente par exemple une épaisseur comprise entre 1,3 et 3 mm et de préférence comprise entre 1,6 et 2,2 mm. La couche d'envers (2) est renforcée par une armature de renfort (3) qui peut être une toile de jute, une armature à base de papier, un non-tissé, une grille tissée en polyester, ou un tissu en coton ou en fibres naturelles par exemple, noyée dans l'épaisseur de la couche d'envers (2). Les couches nobles (2a) et recyclées (2b) de la couche d'envers (2) sont, par exemple, calandrées ensemble sur l'armature de renfort (3) avant d'être réticulées dans un four, par exemple à 80°C pendant plus de 30 jours. La couche d'envers (2) présente par exemple une épaisseur comprise entre 1,5 et 3 mm.

On apporte ensuite une couche d'usure (4), transparente à la lumière du domaine visible, notamment réalisée en PET, TPU de préférence aliphatique, PP, PETG ou en ionomère, ou PVC, et on la lie à la couche d'envers (2), en positionnant préalablement une couche d'impression décor (5) entre la couche d'usure (4) et la couche d'envers (2). Par exemple, la couche d'impression décor (5) présente une épaisseur comprise entre 4 et 300 µm et peut être imprimée sur une face inférieure de la couche d'usure (4) ou sur une face supérieure de la couche d'envers (2). La couche d'usure (4) comprend par exemple, une densité comprise entre 0,9 et 1,4, et de préférence comprise entre 1,15 et 1,25 et une épaisseur comprise entre 50 et 600 µm, et de préférence comprise entre 200 et 500 µm. La structure multicouche présente une épaisseur comprise entre 1,4 mm et 3,5mm.

Plusieurs solutions sont possibles pour lier la couche d'usure (4) à la couche d'envers (2) à base de linoléum. Par exemple, les deux couches peuvent être laminées ensemble et à chaud de manière à obtenir une fusion des matériaux à l'interface des deux couches ou bien peuvent être liées par l'intermédiaire d'une couche de liaison (6), éventuellement transparente à la lumière du domaine du visible, telle qu'une couche de colle thermofusible un film thermofusible, une grille thermofusible ou un voile thermofusible par exemple un non-tissé, de copolyester ou de copolyamide.

Le film thermofusible comprend par exemple une masse surfacique de 20 à 300 g/m² et peut être monocouche, par exemple en EVA, TPU, copolyamide, polyester ou copolyester, ou un film thermofusible bi-couche, par exemple co-extrudé, composé d'une couche de copolyamide et d'une couche de polyoléfine.

La grille thermofusible ou le voile thermofusible par exemple non-tissé, de copolyester ou de copolyamide comprend par exemple une masse surfacique de 5 à 100g/m2.

La couche d'impression décor (5) est de préférence imprimée par une machine d'impression numérique, et peut-être une couche d'encre à base aqueuse ou d'encre UV à faire réticuler sous ultraviolets, imprimée éventuellement sur une couche d'encre blanche (7) afin d'unifier et d'améliorer la reproductibilité des couleurs du décor.

La couche d'usure (4) peut être vernie pour lui conférer des bonnes propriétés de surface, notamment brillance, résistance à l'encrassement et glissance, avec un vernis, par exemple acrylique ou polyuréthane, d'une épaisseur généralement comprise entre 7 et 30µm.

Afin d'équilibrer davantage la structure multicouche selon l'invention, une couche de vernis réticulée (11), par exemple base de polyuréthane ou d'acrylique, d'une épaisseur comprise entre 5 et 30 µm, de préférence entre 10 et 20 µm, est déposée sur une face inférieure de la couche d'envers (2).

La couche de vernis (11) est de préférence réticulée au moyen d'une exposition à un rayonnement ultraviolet, suivie ou précédée d'une exposition à un émetteur laser monochromatique de type laser à excimère, et comprend avantageusement une face inférieure texturée, par exemple grainée, pour améliorer l'adhérence avec le sol ou le mur. La couche de vernis peut être réticulée uniquement avec une exposition à un rayonnement ultraviolet, mais l'exposition également à un émetteur laser monochromatique de type laser à excimère permet d'augmenter les tensions dans la couche de vernis ce qui favorise le retour à plat de la structure multicouche.

À partir du concept à la base de l'invention, plusieurs formes de réalisation peuvent être envisagées.

Par exemple, la référence à la figure 1, une couche d'impression décor (5) peut être imprimée sur une face inférieure d'une couche d'usure (4) en PET, TPU, PP, ionomère ou PETG ou PVC.

Par-dessus la couche d'impression décor (5), on imprime ensuite, de manière optionnelle, et de préférence aussi avec une machine d'impression numérique, une couche d'encre blanche (7), d'épaisseur de l'ordre de 5 à 10 µm.

La couche d'usure (4) est ensuite retournée et liée, c'est-à-dire laminée à chaud ou par l'intermédiaire d'une couche de liaison (6), avec une couche d'envers (2) à base de linoléum naturel, ou bien composée d'une couche supérieure (2a) en linoléum dit « noble » et une couche inférieure (2b) de linoléum recyclé, supportée par une armature de renfort (3), telle qu'une toile de jute, une armature à base de papier, un non-tissé, ou une grille tissée en polyester, et avec une couche de vernis réticulée (11) déposée en envers et destinée à être en contact avec le sol ou le mur à recouvrir.

La couche de liaison (6) peut être un primaire d'accrochage, une couche de colle thermofusible, ou un film thermofusible.

En variante, et selon la figure 2, la couche d'armature de renfort (3) peut être positionnée entre la couche de liaison (6) et la face supérieure de la couche d'envers (2), afin de limiter davantage, voire supprimer le phénomène d'incurvation.

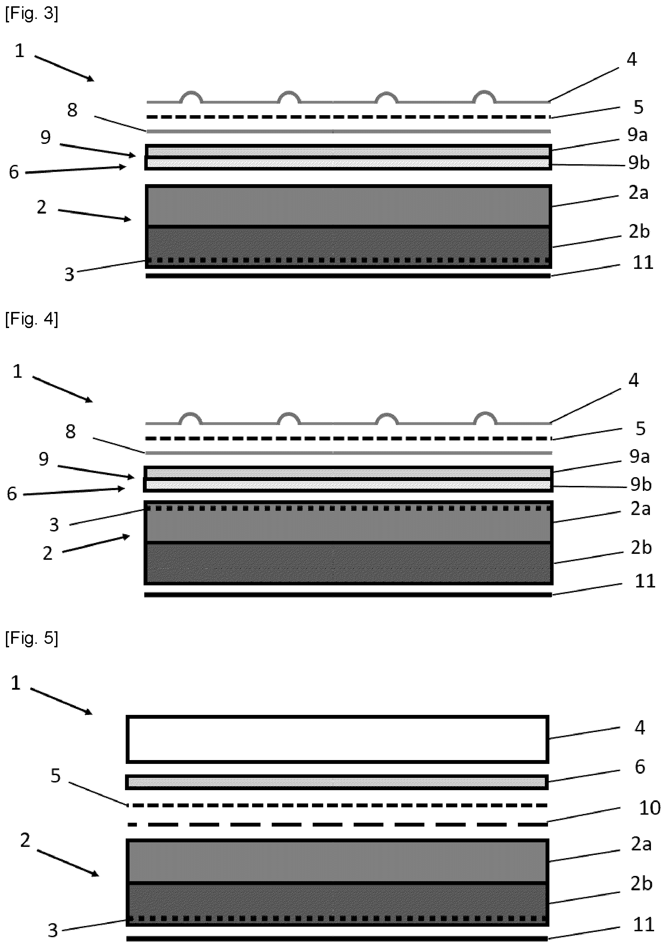

En variante et selon la figure 3, la structure multicouche (1) comprend une couche support (8), par exemple d'épaisseur comprise en 70 et 150 µm, en polypropylène ou en papier imprégné d'un liant tel que de la résine mélamine formaldéhyde ou urée formaldéhyde, positionnée entre la couche d'usure (4) et la couche de liaison (6). Plus précisément, la couche d'usure (4), la couche d'impression décor (5) et la couche support (8) forment un complexe, lequel complexe est lié à la couche d'envers (2) par la couche de liaison (6). Lors de la fabrication du complexe, la couche d'impression décor (5) peut être imprimée sur la face inférieure de la couche d'usure (4), ou bien imprimée sur une face supérieure de la couche support (8).

Par exemple, le complexe peut comprendre une couche support (8) en papier pré-imprimé d'une couche d'impression décor (5) puis lié par laminage à chaud avec une couche d'usure (4) en polypropylène. La couche d'usure (4) est ensuite vernie.

Dans cet exemple, la couche de liaison (6) se présente avantageusement sous la forme d'une colle thermofusible, par exemple en polyuréthane réticulé, la dépose de la colle étant éventuellement précédée d'un prétraitement de type corona ou plasma de la surface de la couche d'envers (2) afin d'améliorer son adhérence.

Dans un autre exemple, le complexe peut comprendre une couche support (8) en polypropylène imprimé d'une couche d'impression décor (5) puis lié par laminage à chaud avec une couche d'usure (4) en polypropylène. La couche d'usure (4) est ensuite vernie.

Dans cet exemple, la couche de liaison (6) se présente avantageusement sous la forme d'un film thermofusible bicouche (9) comprenant une couche supérieure (9a) en polyoléfine, en raison de sa bonne affinité avec le polypropylène, et une couche inférieure (9b) en copolyamide, en raison de sa bonne affinité avec le linoléum de la couche d'envers (2).

La couche d'envers (2) est similaire à celle représentée sur la figure 1, avec l'armature de renfort (3) positionnée sur la face inférieure de la couche d'envers (2) et recouverte d'une couche de vernis réticulée (11) destinée à être en contact avec le sol ou le mur à recouvrir.

Dans les exemples des figures 2 et 3, la couche d'impression décor (5) peut être imprimée avec des encres aqueuses par héliogravure. La couche d'usure (4), par exemple une couche obtenue à partir d'un ionomère type Surlyn c'est-à-dire en copolymère d'éthylène avec un monomère de vinyle (acide méthacrylique), comprend par exemple une épaisseur de l'ordre de 300 µm et est grainée. Le complexe formé par la couche d'usure (4), la couche d'impression décor (5) et la couche support (8) comprend une épaisseur totale comprise entre 170 µm et 420 µm suivant la classe d'usure désirée.

La couche de liaison (6), qui peut notamment être un film thermofusible bicouche (9) en polyoléfine (9a) /copolyamide (9b) possède par exemple un poids compris entre 24 et 95 g/m² et permet d'assembler le complexe avec la couche d'envers (2).

En variante, et en référence à la figure 4, l'armature de renfort (3) peut être positionnée entre la couche de liaison (6) et la couche d'envers (2) afin de diminuer, voire de supprimer le phénomène d'incurvation.

Selon une autre variante de fabrication, illustrée à la figure 5, l'invention consiste à imprimer directement la couche d'impression décor (5) sur une couche supérieure de la couche d'envers (2) à base de linoléum.

La structure multicouche (1) comprend alors, du sol ou du mur vers la surface :
- une couche de vernis réticulée (11) ;
- une couche d'envers (2) à base de linoléum, avec une armature de renfort (3) noyée dans l'épaisseur de la face inférieure de la couche d'envers (2) ;
- une couche d'impression décor (5) imprimée sur une face supérieure de la couche d'envers (2) ou éventuellement sur un primaire d'accrochage (10) de type polyuréthane ou acrylique déposé sur la face supérieure de la couche d'envers (2) ;
- une couche de liaison (6), notamment transparente à la lumière du domaine du visible, telle qu'un autre primaire d'accrochage, une colle thermofusible, un film thermofusible ;
- une couche d'usure (4) positionnée sur la couche de liaison (6).

Bien entendu, et comme évoqué précédemment, la couche de liaison (6) est optionnelle si les couches d'usure (4) et d'envers (2) sont laminées ensemble et à chaud.

Des tests selon la norme ISO 23999 procédure B, ont été réalisés sur un exemple de structure multicouche (1) selon la Figure 2. Un échantillon de référence reprenant la structure de la figure 2 sans la couche (11) de vernis est d'abord réalisé. A partir d'un échantillon de taille A4 de la structure (1), l'incurvation est mesurée dans le sens machine (MD) et travers (CMD) ainsi que dans les coins. La mesure est réalisée avant une mise à l'étuve puis l'échantillon est porté à 50°C pendant 6 heures, ensuite une seconde mesure est réalisée 24 heures après la sortie de l'étuve.

On obtient les résultats compilés dans le tableau n°1 ci-dessous.

**[Table 1]**

| Référence sans vernis (11) | | |
|---|---|---|
| | Incurvation initiale (mm) | Incurvation finale (mm) |
| MD | 4 | 10 |
| CMD | 0 | 0 |
| Coins | 6 | 11 |

Un premier échantillon (ECH1) selon l'invention présentant une couche de vernis polyuréthane (PU) réticulée sous ultraviolets de 8g/m2 est testé selon les mêmes conditions. Les résultats sont compilés dans le tableau n°2 ci-dessous.

**[Table 2]**

| ECH1 | | |
|---|---|---|
| | Incurvation initiale (mm) | Incurvation finale (mm) |
| MD | 3 | 2 |
| CMD | 0 | -3 |
| Coins | -2 | -3 |

Cet échantillon ECH1 permet de montrer que l'incurvation de la structure est corrigée par la présence de la couche de vernis et ce, même après passage à l'étuve.

Un second échantillon (ECH2) selon l'invention présentant une couche de vernis polyuréthane réticulé sous excimère puis sous ultraviolets de 10g/m2 est testé selon les mêmes conditions. Les résultats sont compilés dans le tableau n°3 ci-dessous.

**[Table 3]**

| ECH2 | | |
|---|---|---|
| | Incurvation initiale (mm) | Incurvation finale (mm) |
| MD | 0 | 0 |
| CMD | -2 | -2 |
| Coins | -2 | -2 |

Cet échantillon ECH2 permet de montrer que l'incurvation de la structure est encore améliorée et est inférieure à 2 mm et ce, même après passage à l'étuve.

## Revendications

1. Structure multicouche (1) pour la réalisation d'un revêtement de sol ou de mur comprenant une couche d'envers (2) à base de linoléum renforcée par une armature de renfort (3), une couche d'usure (4) en polymère thermoplastique transparente au moins à la lumière du domaine du visible et liée à la couche d'envers (2), et une couche d'impression décor (5) positionnée entre la couche d'usure (4) et la couche d'envers (2), **caractérisée en ce qu'**elle comprend une couche de vernis réticulée (11) déposée sur une face inférieure de la couche d'envers (2).

2. Structure multicouche (1) selon la revendication 1, **caractérisée en ce que** la couche de vernis (11) est à base de polyuréthane ou d'acrylique.

3. Structure multicouche (1) selon l'une des revendications précédentes, **caractérisée en ce que** la couche de vernis (11) présente une épaisseur comprise entre 5 et 30 µm, de préférence entre 10 et 20 µm.

4. Structure multicouche (1) selon l'une des revendications précédentes, **caractérisée en ce que** la couche de vernis (11) comprend une face inférieure texturée.

5. Structure multicouche (1) selon l'une des revendications précédentes, **caractérisée en ce que** la couche d'usure (4) est en PET, TPU, PP, PETG, ionomère, ou PVC.

6. Structure multicouche (1) selon l'une des revendications précédentes, **caractérisée en ce que** la couche d'impression décor (5) est une couche d'encre imprimée :
- sur une face inférieure de la couche d'usure (4) qui est transparente, ou ;
- sur une face supérieure de la couche d'envers (2), ou ;
- sur une face supérieure d'une couche support (8) en thermoplastique ou d'une couche en papier imprégné d'un liant.

7. Structure multicouche (1) selon l'une des revendications précédentes, **caractérisée en ce que** la couche d'envers (2) présente une épaisseur comprise entre 1,3 mm et 3 mm, de préférence entre 1,6 mm et 2,2 mm.

8. Structure multicouche (1) selon l'une des revendications précédentes, **caractérisée en ce qu'**elle présente une épaisseur comprise entre 1,4 mm et 3,5 mm.

9. Structure multicouche (1) selon l'une des revendications précédentes, **caractérisée en ce que** l'armature de renfort (3) est noyée dans l'épaisseur de la couche d'envers (2) au niveau d'une face inférieure et/ou supérieure de la couche d'envers (2).

10. Structure multicouche (1) l'une des revendications précédentes, **caractérisée en ce que** l'armature de renfort (3) se présente sous la forme d'une toile de jute, d'une armature à base de papier, d'un non-tissé ou d'une grille tissée en polyester, d'un tissu en coton ou fibres naturelles.

11. Procédé de fabrication d'une structure multicouche (1) selon l'une des revendications précédentes, **caractérisé en ce que** la couche de vernis (11) est réticulée au moyen d'une exposition à un rayonnement ultraviolet, suivie ou précédée d'une exposition à un émetteur laser monochromatique de type laser à excimère.
